# EUROPÄISCHE PATENTSCHRIFT

(11) **EP 2 308 746 B1**
(45) Veröffentlichungstag und Bekanntmachung des Hinweises auf die Patenterteilung: **07.05.2014**
(21) Anmeldenummer: 10186157.3
(22) Anmeldetag: 01.10.2010
(51) Int. Cl.: B62J 6/02

(54) **Scheinwerfer für ein Zweirad mit Tagfahrlicht, sowie Verfahren zum Betrieb eines Fahrradscheinwerfers**
Headlight for a bicycle with daytime driving light and method for operating a vehicle headlight
Phare pour deux-roues doté d'un feu de roulage de jour et procédé de fonctionnement d'un phare de vélo

(30) Priorität: 09.10.2009 DE 102009049004
(43) Veröffentlichungstag der Anmeldung: 13.04.2011
(73) Patentinhaber: Busch & Müller KG, 58540 Meinerzhagen (DE)
(72) Erfinder: Müller, Rainer, 58540, Meinerzhagen (DE)
(74) Vertreter: Heine, Christian Klaus

(56) Entgegenhaltungen:
- DE-A1-102006 028 863
- DE-A1-102007 030 318

## Beschreibung

Die vorliegende Erfindung betrifft einen Scheinwerfer für ein Zweirad, insbesondere ein Fahrrad, zumindest umfassend mindestens eine Hauptlichtquelle und mindestens eine Sekundärlichtquelle. Darüber hinaus betrifft die Erfindung ein Verfahren zum Betreiben des Scheinwerfers.

Heute erhältliche Fahrradfrontscheinwerfer übertreffen teilweise die durch die Straßenverkehrsordnung gegebenen Mindestvoraussetzungen. So sind Fahrradscheinwerfer bekannt, die in einer Entfernung von 10 Metern vom Scheinwerfer eine Lichtleistung von 40 Lux und mehr aufweisen. Die auf diese Weise erhaltene Verbesserung der Sicht bei Nachtfahrten und die daraus resultierende frühere Erkennung von Hindernissen erhöht die Sicherheit für den Fahrradfahrer. Darüber hinaus wird das Fahrrad im Dunkeln von anderen Verkehrsteilnehmern frühzeitig erkannt.

Obwohl mittlerweile kaum Tretleistung notwendig ist, um einen Fahrradscheinwerfer zu betreiben, ist es bisher nicht üblich, den Fahrradscheinwerfer bei Tag anzuschalten. Da bei modernen Fahrradscheinwerfern das abgestrahlte Licht auf die Fahrbahn gerichtet ist und die Fahrradscheinwerfer kaum Streulicht erzeugen, wird der betriebene Fahrradscheinwerfer am Tag bei großer Umgebungshelligkeit von anderen Verkehrsteilnehmern nicht gut wahrgenommen. Ein auch bei Tagfahrten auffälliger Scheinwerfer würde die Sicherheit des Fahrradfahrers weiter erhöhen, da der Fahrradfahrer besser im Straßenverkehr von anderen Verkehrsteilnehmern wahrgenommen würde.

Ein Scheinwerfer mit den Merkmalen des Oberbegriffs des Anspruchs 1 ist bekannt aus DE-10200703030318.

Es ist daher Aufgabe der Erfindung die mit dem Bezug auf den Stand der Technik bestehenden Probleme zumindest teilweise zu lösen und insbesondere einen Scheinwerfer und ein Verfahren zum Betreiben des Scheinwerfers anzugeben, die es erlauben, einen Fahrradscheinwerfer sowohl bei Nachtfahrten als auch bei Tagfahrten gut sichtbar zu betreiben. Es soll insbesondere ein Scheinwerfer für ein Zweirad vorgeschlagen werden, der die Sicherheit des Fahrradfahrers bei Tagfahrten erhöht.

Diese Aufgabe wird gelöst durch einen Fahrradscheinwerfer und ein Verfahren zum Betreiben eines Fahrradscheinwerfers mit den Merkmalen der unabhängigen Ansprüche. Die jeweiligen abhängigen Ansprüche sind auf vorteilhafte Weiterbildungen gerichtet.

Es ist darauf hinzuweisen, dass die in den abhängigen Ansprüchen einzeln aufgeführten Merkmale in beliebiger, technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Die Aufgabe wird gelöst durch einen Scheinwerfer für ein Zweirad, insbesondere ein Fahrrad, zumindest umfassend:
- mindestens eine Hauptlichtquelle, die mit einer ersten Hauptstromstärke in einem Tagfahrmodus und einer zweiten Hauptstromstärke in einem Nachtfahrmodus betreibbar ist,
- mindestens eine Sekundärlichtquelle, die mit einer ersten Sekundärstromstärke in einem Tagfahrmodus betreibbar ist,
wobei die zweite Hauptstromstärke größer ist als die erste Hauptstromstärke.

Dass die mindestens eine Hauptlichtquelle, die bevorzugt eine Licht emittierende Diode ist, mit zwei Hauptstromstärken betreibbar ist, bedeutet insbesondere, dass die mindestens eine Hauptlichtquelle mit mindestens zwei Leuchtstärken betreibbar ist, wobei in einem Nachtfahrmodus die größere Leuchtstärke vorliegt. Die Leuchtstärke ist im Nachtfahrmodus bevorzugt deutlich größer, besonders bevorzugt mindestens zweimal so groß wie im Tagfahrmodus, wodurch im Nachtfahrmodus eine bessere Ausleuchtung der Fahrbahn erfolgt. Die mindestens eine Sekundärlichtquelle besteht bevorzugt aus einer Vielzahl von Licht emittierenden Dioden.

Die Hauptlichtquelle ist im Betrieb an einem Fahrrad insbesondere dafür vorgesehen, dass der Bereich vor einem Fahrrad ausgeleuchtet wird. Die Sekundärlichtquelle ist hingegen dafür vorgesehen, dass das Fahrrad insbesondere auch während Tagfahrten frühzeitig bemerkt wird. Dies wird dadurch erreicht, dass das von der Sekundärlichtquelle stammende Licht im Betrieb am Fahrrad zum größten Teil etwa parallel zur Straße bzw. leicht nach oben gerichtet ist. Auf diese Weise wird die Aufmerksamkeit der anderen Verkehrsteilnehmer erreicht, ohne diese jedoch zu blenden. Die Lichtstärke der mindestens einen Sekundärlichtquelle ist in der Regel geringer als die der Hauptlichtquelle. Die mindestens eine Hauptlichtquelle kann im Betrieb eine Lichtstärke von mindestens 1000 cd, bevorzugt mindestens 4000 cd, aufweisen, während die mindestens eine Sekundärlichtquelle eine Lichtstärke von mindestens 30 cd, bevorzugt mindestens 50 cd, besonders bevorzugt 100 cd, im Betrieb aufweisen kann.

Die Sekundärlichtquelle wird trotz der geringeren Lichtstärke von anderen Verkehrsteilnehmern besser wahrgenommen als die Hauptlichtquelle, da das von ihr ausgesandte Licht fast direkt auf die Verkehrsteilnehmer gerichtet ist, während das Licht der Hauptlichtquelle hauptsächlich auf die Straße gerichtet ist. Im Tagfahrmodus kann die vertikale Ausdehnung eines Sekundärabstrahlkegels deutlich größer sein als im Nachtfahrmodus, da am Tage die Blendgefährdung für andere Verkehrsteilnehmer geringer ist. Durch eine im wesentlichen parallel zur Straßenoberfläche gerichtete Sekundärabstrahlrichtung der Sekundärlichtquelle im Tagfahrmodus ist das Fahrrad auch mit geringerer Beleuchtungsstärke von den übrigen Verkehrsteilnehmern am Tage gut zu erkennen, ohne diese zu blenden.

In Weiterbildung der Erfindung wird vorgeschlagen, dass die mindestens eine Sekundärlichtquelle im Nachtfahrmodus mit einer zweiten Sekundärstromstärke betreibbar ist, die kleiner ist als die erste Sekundärstromstärke.

Dadurch, dass bei einer kleineren Stromstärke die Lichtstärke einer Lichtquelle schwächer ist, wird mit dieser Weiterbildung erreicht, dass im Nachtfahrmodus die mindestens eine Sekundärlichtquelle nicht so stark leuchtet, um eine Blendung von anderen Verkehrsteilnehmern zu vermeiden. Bei Tagfahrten kann die Sekundärlichtquelle mit größerer Lichtstärke betrieben werden, da das menschliche Auge bei großer Helligkeit nicht so empfindlich ist und eine Blendung nicht so einfach erfolgen kann. Besonders bevorzugt ist eine Ausgestaltung, bei der die zweite Sekundärstromstärke so klein ist, dass im Nachtfahrmodus die mindestens eine Sekundärlichtquelle nicht oder nur sehr schwach leuchtet.

Dadurch, dass das von der Hauptlichtquelle stammende Licht einen Hauptabstrahlkegel bildet mit einer Hauptachse und das von der Sekundärlichtquelle stammende Licht einen Sekundärabstrahlkegel mit einer Sekundärachse bildet, wobei die Hauptachse und die Sekundärachse einen von Null verschiedenen Winkel einschließen, wird erreicht dass die Hauptlichtquelle die Fahrbahn vor einem Fahrrad ausleuchten kann, während das Licht der Sekundärlichtquelle die Aufmerksamkeit der anderen Verkehrsteilnehmer erweckt, da dieses im Betrieb direkt auf die anderen Verkehrsteilnehmer gerichtet ist.

Eine andere Weiterbildung ist dadurch gekennzeichnet, dass das von der Sekundärlichtquelle abgestrahlte Licht ungerichtet den Scheinwerfer verlässt. Mit ungerichtet ist gemeint, dass das Licht in einen Sekundärabstrahlkegel emittiert wird, der einen großen Öffnungswinkel sowohl in horizontaler Richtung als auch in vertikaler Richtung aufweist, bevorzugt mit einem Öffnungswinkel größer als 60°, bevorzugt größer als 120°, relativ zu der Sekundärachse. Durch einen großen Abstrahlwinkel ist gewährleistet, dass der Scheinwerfer und insbesondere die Sekundärlichtquelle im Tagfahrmodus aus einem möglichst großen Bereich sichtbar ist.

Weiterhin ist es vorteilhaft, wenn bei dem erfindungsgemäßen Scheinwerfer ein Helligkeitssensor ausgebildet ist, der eine Umgebungshelligkeit erfasst, wobei der Scheinwerfer so ansteuerbar ist, dass dann, wenn die Umgebungshelligkeit über einem vorgebbaren Grenzwert liegt, der Scheinwerfer im Tagfahrmodus und bei Unterschreiten des Grenzwertes im Nachtfahrmodus betreibbar ist.

Ein solcher Scheinwerfer kann bei jeder Fahrt in Betrieb sein. Der Fahrradfahrer muss nicht bei jedem Fahrtantritt den Scheinwerfer einschalten oder überprüfen, ob dieser schon eingeschaltet ist. Zudem wird der Scheinwerfer automatisch in dem Modus betrieben, der dem Fahrradfahrer die höchste Sicherheit im Straßenverkehr bietet.

Gemäß einer weiteren zweckmäßigen Ausführungsform kann mit einem Schalter zumindest zwischen dem Tagfahrmodus und dem Nachtfahrmodus umgeschaltet werden.

Ein solcher Scheinwerfer erlaubt es, dass der Fahrradfahrer den Betriebsmodus des Scheinwerfers manuell einstellen kann. So kann er beispielsweise den Scheinwerfer ausschalten, nur im Tagfahrmodus betreiben, nur im Nachtfahrmodus oder im Automatikbetrieb betreiben.

Gemäß einem weiteren Aspekt der Erfindung wird auch ein Verfahren mit mindestens einer Hauptlichtquelle, mindestens einer Sekundärlichtquelle, einem Helligkeitssensor umfassend zumindest die folgenden Schritte vorgeschlagen:
a) Bestimmen einer Umgebungshelligkeit,
b) Betrieb in einem Tagfahrmodus, wobei die Hauptlichtquelle mit einer ersten Hauptstromstärke betrieben wird, die kleiner als eine zweite Hauptstromstärke ist, und die Sekundärlichtquelle mit einer ersten Sekundärstromstärke betrieben wird, wenn die Umgebungshelligkeit über einem vorgebbaren Grenzwert liegt; und
c) Betrieb in einem Nachtfahrmodus, wobei die Hauptlichtquelle mit der zweiten Hauptstromstärke betrieben wird und die Sekundärlichtquelle mit einer zweiten Sekundärstromstärke betrieben wird, wenn die Umgebungshelligkeit unter einem vorgebbaren Grenzwert liegt.

Zur Durchführung des erfindungsgemäßen Verfahrens ist insbesondere ein erfindungsgemäßer Scheinwerfer geeignet. Die Umgebungshelligkeit wird bevorzugt mit einem Helligkeitssensor, der beispielsweise als lichtempfindliche Diode ausgeführt sein kann, bestimmt. Liegt der Messwert über einem vorgebbaren Grenzwert, der dem Einsetzen einer abendlichen Dämmerung entsprechen sollte, wird der Scheinwerfer im Tagfahrmodus betrieben. Liegt der Messwert unterhalb des vorgebbaren Grenzwerts, wird der Scheinwerfer automatisch im Nachtfahrmodus betrieben. Im Tagfahrmodus ist die erste Sekundärstromstärke größer als Null, während die zweite Sekundärstromstärke im Nachtfahrmodus Null oder nahe Null sein kann.

Gemäß einer weiteren vorteilhaften Ausgestaltung des erfindungsgemäßen Verfahrens wird in dem Tagfahrmodus die mindestens eine Sekundärlichtquelle mit einer ersten Sekundärstromstärke betrieben und in dem Nachtfahrmodus mit einer zweiten Sekundärstromstärke betrieben, wobei die erste Sekundärstromstärke größer ist als die zweite Sekundärstromstärke. Da die Lichtstärken der Lichtquellen proportional zu dem sie durchfließenden Strom sind, ist durch diese Ausgestaltung des Verfahrens gewährleistet, dass die Sekundärlichtquelle im Tagfahrmodus heller leuchtet als im Nachtfahrmodus und so das Fahrrad am Tag gut zu erkennen ist, ohne dass es nachts zur Blendung anderer Verkehrsteilnehmer kommt.

Gemäß einer weiteren vorteilhaften Ausgestaltung des erfindungsgemäßen Verfahrens wird in dem Tagfahrmodus die mindestens eine Sekundärlichtquelle mit einer ersten Sekundärstromstärke und in dem Nachtfahrmodus mit einer zweiten Sekundärstromstärke betrieben, wobei die erste Sekundärstromstärke gleich groß ist wie die zweite Sekundärstromstärke.

Die für den erfindungsgemäßen Scheinwerfer offenbarten Details und Vorteile lassen sich auf das erfindungsgemäße Verfahren übertragen und anwenden und umgekehrt. Die Erfindung sowie das technische Umfeld werden nachfolgend anhand der Figuren beispielhaft erläutert. Es ist darauf hinzuweisen, dass die Figuren besonders bevorzugte Ausführungsvarianten der Erfindung zeigen, diese jedoch nicht darauf beschränkt. Es zeigen schematisch:
- Fig. 1:: ein Schema eines erfindungsgemäßen Scheinwerfers,
- Fig. 2:: ein Ausführungsbeispiel des erfindungsgemäßen Scheinwerfers in Frontansicht,
- Fig. 3:: das Ausführungsbeispiel in Seitenansicht.

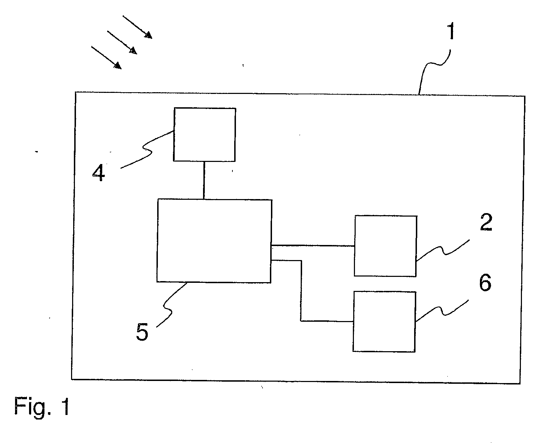

Fig. 1 zeigt ein Schema eines erfindungsgemäßen Scheinwerfers 1, der eine Hauptlichtquelle 2 und eine Sekundärlichtquelle 6 umfasst. Der Scheinwerfer 1 kann in verschiedenen Betriebsmodi betrieben werden. Die Hauptlichtquelle 2 kann dazu zumindest mit zwei unterschiedlichen Stromstärken, nämlich einer ersten Hauptstromstärke in einem Tagfahrmodus und einer größeren zweiten Hauptstromstärke in einem Nachtfahrmodus betrieben werden, wobei die größere zweite Hauptstromstärke eine höhere Lichtstärke der Hauptlichtquelle 1 zur Folge hat und in diesem Fall als Nachtfahrmodus bezeichnet wird. Das Betreiben der Hauptlichtquelle 2 mit der geringeren ersten Hauptstromstärke wird dementsprechend als Tagfahrmodus bezeichnet.

Zumindest im Tagfahrmodus wird die Sekundärlichtquelle 6 mit einer ersten Sekundärstromstärke betrieben. Bei einem an einem Fahrrad montierten erfindungsgemäßen Scheinwerfer 1 ist das Licht der Hauptlichtquelle 2 auf den Straßenbereich vor dem Fahrrad gerichtet, während das Licht der Sekundärlichtquelle 6 nahezu in den ganzen Halbraum vor dem Scheinwerfer 1 abstrahlt. Im Nachtfahrmodus wird die Straße vor dem Fahrrad vorteilhaft durch die Hauptlichtquelle 2 ausgeleuchtet und das Fahrrad ist gut für andere Verkehrsteilnehmer zu erkennen. Im Tagfahrmodus ist die Lichtstärke der Hauptlichtquelle 2 reduziert. Das Fahrrad ist weiterhin gut sichtbar, da die Sekundärlichtquelle 6 betrieben wird, die von den übrigen Verkehrsteilnehmern frühzeitig bemerkt wird, so dass die Sicherheit des Fahrradfahrers bei Tagfahrten erhöht ist. Bevorzugt strahlt die mindestens eine Sekundärlichtquelle 6 im Nachtfahrmodus kein Licht ab, um die Blendwahrscheinlichkeit durch die Sekundärlichtquelle 6 bei Nacht zu eliminieren.

In einer weiteren Ausführungsform der Erfindung umfasst der Scheinwerfer 1 zusätzlich einen Helligkeitssensor 4 und eine Steuereinheit 5, wobei die Steuereinheit 5 den Stromfluss durch die Hauptlichtquelle 2 und/oder Sekundärlichtquelle 6 steuern kann. Der Helligkeitssensor 4 erfasst die Umgebungshelligkeit und leitet den Messwert zu der Steuereinheit 5 weiter. Liegt der Messwert oberhalb eines vorgebbaren Grenzwerts, so wird der Scheinwerfer 1 im Tagfahrmodus betrieben, liegt er unterhalb des Grenzwertes, z. B. bei einsetzender abendlicher Dämmerung, wird der Scheinwerfer 1 im Nachtfahrmodus betrieben.

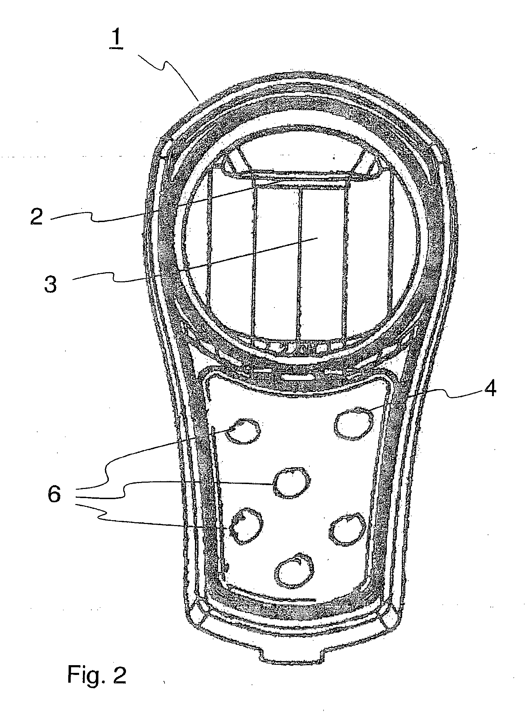

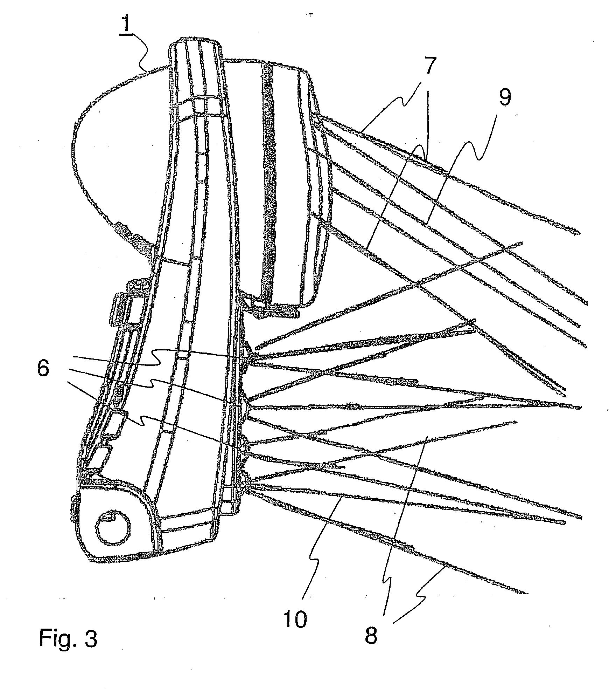

Fig. 2 und Fig. 3 zeigen ein weiteres Ausführungsbeispiel eines erfindungsgemäßen Scheinwerfers 1. In diesem Ausführungsbeispiel weist der Scheinwerfer 1 eine oben am Scheinwerfer angeordnete Hauptlichtquelle 2 auf. Die Hauptlichtquelle 2 bestrahlt einen Reflektor 3, welcher das von der Hauptlichtquelle 2 erzeugte Licht in einen Hauptabstrahlkegel 7 mit einer Hauptabstrahlrichtung 9 so umlenkt, das bevorzugt sowohl der Nahbereich, also der Bodenbereich unmittelbar vor dem Fahrrad, als auch der Fernbereich, der Bodenbereich bis zu 25 m von dem Fahrrad entfernt, von dem Scheinwerfer 1 ausgeleuchtet werden. Die Hauptlichtquelle 2 wird im Nachtfahrmodus möglichst hell leuchtend eingesetzt. Die am Scheinwerfer 1 unten angeordneten Sekundärlichtquellen 6 besitzen im Betrieb eine nicht so große Lichtstärke wie die Hauptlichtquelle 2 im Nachtfahrmodus. Das Licht der Sekundärlichtquelle 6 wird in einen Sekundärabstrahlkegel 8 abgestrahlt, der mit einer Sekundärabstrahlrichtung 10 nahezu parallel zum Boden ausgerichtet ist. Die Sekundärlichtquelle 6 dient daher bevorzugt als Beleuchtung im Tagfahrmodus. Ein Helligkeitssensor 4, bevorzugt eine lichtempfindliche Diode, erfasst die Umgebungshelligkeit und steuert dementsprechend den Betriebsmodus des Scheinwerfers 1.

Der erfindungsgemäße Scheinwerfer 1 und das erfindungsgemäße Verfahren zum Betrieb eines Scheinwerfers 1 erlauben in vorteilhafter Weise einen Betrieb sowohl im Tagfahrmodus als auch im Nachtfahrmodus. So kann die Sicherheit des Radfahrers bei Tage verbessert werden, ohne dass andere Verkehrsteilnehmer geblendet werden, wobei gleichzeitig eine gute Ausleuchtung der Straße bei Nacht gewährleistet ist.

### Bezugszeichenliste

- 1: Scheinwerfer
- 2: Hauptlichtquelle
- 3: Lichtführungsmittel
- 4: Helligkeitssensor
- 5: Steuereinheit
- 6: Sekundärlichtquelle
- 7: Hauptabstrahlkegel
- 8: Sekundärabstrahlkegel
- 9: Hauptabstrahlrichtung
- 10: Sekundärabstrahlrichtung

## Patentansprüche

1. Scheinwerfer (1) für ein Zweirad, insbesondere ein Fahrrad, zumindest umfassend
- mindestens eine Hauptlichtquelle (2), die mit einer ersten Hauptstromstärke in einem Tagfahrmodus und einer zweiten Hauptstromstärke in einem Nachtfahrmodus betreibbar ist, wobei die zweite Hauptstromstärke größer ist als die erste Hauptstromstärke, **gekennzeichnet durch** mindestens eine Sekundärlichtquelle (6), die mit einer ersten Sekundärstromstärke in einem Tagfahrmodus betreibbar ist.

2. Scheinwerfer (1) nach Anspruch 1, wobei die mindestens eine Sekundärlichtquelle im Nachtfahrmodus mit einer zweiten Sekundärstromstärke betreibbar ist, die kleiner ist als die erste Sekundärstromstärke.

3. Scheinwerfer (1) nach einem der vorhergehenden Ansprüche, wobei das von der Hauptlichtquelle (2) stammende Licht einen Hauptabstrahlkegel bildet mit einer Hauptachse und das von der Sekundärlichtquelle stammende Licht einen Sekundärabstrahlkegel mit einer Sekundärachse bildet, wobei die Hauptachse und die Sekundärachse einen von Null verschiedenen Winkel einschließen.

4. Scheinwerfer (1) nach einem der vorhergehenden Ansprüche, wobei das von der Sekundärlichtquelle (6) abgestrahlte Licht ungerichtet den Scheinwerfer verlässt.

5. Scheinwerfer (1) nach einem der vorhergehenden Ansprüche, bei dem ein Helligkeitssensor (4) ausgebildet ist, der eine Umgebungshelligkeit erfasst, wobei der Scheinwerfer (1) so ansteuerbar ist, dass dann, wenn die Umgebungshelligkeit über einem vorgebbaren Grenzwert liegt, der Scheinwerfer (1) im Tagfahrmodus und bei Unterschreiten des Grenzwertes im Nachtfahrmodus betreibbar ist.

6. Vorrichtung (1) nach einem der vorhergehenden Ansprüche, bei der ein Schalter zum Umschalten zwischen dem Tagfahrmodus und dem Nachtfahrmodus ausgebildet ist.

7. Verfahren zum Betrieb eines Fahrradscheinwerfers (1) mit mindestens einer Hauptlichtquelle (2), mindestens einer Sekundärlichtquelle (6), einem Helligkeitssensor (4), umfassend zumindest die folgenden Schritte:
a) Bestimmen einer Umgebungshelligkeit,
b) Betrieb in einem Tagfahrmodus, wobei die Hauptlichtquelle mit einer ersten Hauptstromstärke betrieben wird, die kleiner als eine zweite Hauptstromstärke ist, und die Sekundärlichtquelle mit einer ersten Sekundärstromstärke betrieben wird, wenn die Umgebungshelligkeit über einem vorgebbaren Grenzwert liegt; und
c) Betrieb in einem Nachtfahrmodus, wobei die Hauptlichtquelle mit der zweiten Hauptstromstärke betrieben wird und die Sekundärlichtquelle mit einer zweiten Sekundärstromstärke betrieben wird, wenn die Umgebungshelligkeit unter einem vorgebbaren Grenzwert liegt.

8. Verfahren nach Anspruch 7, wobei in dem Tagfahrmodus die mindestens eine Sekundärlichtquelle mit einer ersten Sekundärstromstärke betrieben wird und in dem Nachtfahrmodus mit einer zweiten Sekundärstromstärke betrieben wird, wobei die erste Sekundärstromstärke größer ist als die zweite Sekundärstromstärke.

9. Verfahren nach Anspruch 8, wobei in dem Tagfahrmodus die mindestens eine Sekundärlichtquelle mit einer ersten Sekundärstromstärke betrieben wird und in dem Nachtfahrmodus mit einer zweiten Sekundärstromstärke betrieben wird, wobei die erste Sekundärstromstärke gleich groß ist wie die zweite Sekundärstromstärke.

## Claims

1. Headlamp (1) for a two-wheeler, in particular a bicycle, at least comprising
- at least one main light source (2), which can be operated at a first main current intensity in a daytime running mode and at a second main current intensity in a nighttime running mode, wherein the second main current intensity is higher than the first main current intensity,
**characterized by** at least one secondary light source (6), which can be operated at a first secondary current intensity in a daytime running mode.

2. Headlamp (1) according to Claim 1, wherein the at least one secondary light source can be operated in the nighttime running mode at a second secondary current intensity which is lower than the first secondary current intensity.

3. Headlamp (1) according to one of the preceding claims, wherein the light originating from the main light source (2) forms a main emission cone with a main axis, and the light originating from the secondary light source forms a secondary emission cone with a secondary axis, wherein the main axis and the secondary axis enclose an angle other than zero.

4. Headlamp (1) according to one of the preceding claims, wherein the light emitted by the secondary light source (6) leaves the headlamp undirected.

5. Headlamp (1) according to one of the preceding claims, in which a brightness sensor (4) is formed, which detects an ambient brightness, wherein the headlamp (1) is actuable such that when the ambient brightness is above a predeterminable limit value, the headlamp (1) can be operated in the daytime running mode and when the limit value is undershot, said headlamp can be operated in a nighttime running mode.

6. Apparatus (1) according to one of the preceding claims, in which a switch is formed for switching over between the daytime running mode and the nighttime running mode.

7. Method for operating a bicycle headlamp (1) comprising at least one main light source (2), at least one secondary light source (6), a brightness sensor (4), said method comprising at least the following steps:
a) determination of an ambient brightness,
b) operation in a daytime running mode, wherein the main light source is operated at a first main current intensity which is lower than a second main current intensity, and the secondary light source is operated at a first secondary current intensity when the ambient brightness is above a predeterminable limit value; and
c) operation in a nighttime running mode, wherein the main light source is operated at the second main current intensity, and the secondary light source is operated at a second secondary current intensity when the ambient brightness is below a predeterminable limit value.

8. Method according to Claim 7, wherein, in the daytime running mode, the at least one secondary light source is operated at a first secondary current intensity and in the nighttime running mode is operated at a second secondary current intensity, wherein the first secondary current intensity is higher than the second secondary current intensity.

9. Method according to Claim 8, wherein in the daytime running mode the at least one secondary light source is operated at a first secondary current intensity and in the nighttime running mode is operated at a second secondary current intensity, wherein the first secondary current intensity is equal to the second secondary current intensity.

## Revendications

1. Phare (1) pour véhicule à deux roues, en particulier pour bicyclette, et comprenant au moins
une source principale (2) de lumière apte à être utilisée à une première intensité principale de courant dans un mode de conduite de jour à une deuxième intensité principale de courant dans un mode de conduite de nuit,
la deuxième intensité principale de courant étant supérieure à la première intensité principale de courant,
**caractérisé par**
au moins une source secondaire (6) de lumière apte à être utilisée à une première intensité secondaire de courant dans un mode de conduite de jour.

2. Phare (1) selon la revendication 1, dans lequel la ou les sources secondaires de lumière peuvent être utilisées en mode de déplacement de nuit à une deuxième intensité de courant secondaire inférieure à la première intensité de courant secondaire.

3. Phare (1) selon l'une des revendications précédentes, dans lequel la lumière qui provient de la source principale (2) de lumière forme un cône principal de rayonnement doté d'un axe principal et la lumière provenant de la source secondaire de lumière un cône secondaire de rayonnement doté d'un axe secondaire, l'axe principal et l'axe secondaire formant entre eux un angle différent de zéro.

4. Phare (1) selon l'une des revendications précédentes, dans lequel la lumière émise par la source secondaire (6) de lumière quitte le phare sans être orientée.

5. Phare (1) selon l'une des revendications précédentes, présentant un capteur de luminosité (4) qui saisit la luminosité ambiante, le phare (1) pouvant être commandé de telle sorte que le phare (1) peut être utilisé en mode de conduite de jour lorsque la luminosité ambiante est située au-dessus d'une valeur limite prédéterminée et en mode de conduite de nuit lorsque cette valeur limite n'est pas atteinte.

6. Dispositif (1) selon l'une des revendications précédentes, présentant un commutateur qui permet de commuter entre le mode de conduite de jour et le mode de conduite de nuit.

7. Procédé d'utilisation d'un phare (1) pour véhicule à deux roues qui présente au moins une source principale (2) de lumière, au moins une source secondaire (6) de lumière, un capteur de luminosité (4), et comprenant au moins les étapes suivantes :
a) détermination de la luminosité ambiante,
b) utilisation dans un mode de conduite de jour dans lequel la source principale de lumière est utilisée à une première intensité principale de courant inférieure à une deuxième intensité principale de courant, la source secondaire de lumière étant utilisée à une première intensité de courant secondaire lorsque la lumière ambiante est située au-dessus d'une valeur limite prédéterminée et
c) utilisation en mode de conduite de nuit dans lequel la source principale de lumière est utilisée à la deuxième intensité principale de courant et la source secondaire de lumière à une deuxième intensité secondaire de courant lorsque la luminosité ambiante est située en dessous d'une valeur limite prédéterminée.

8. Procédé selon la revendication 7, dans lequel la ou les sources de lumière secondaires sont utilisées à une première intensité de courant secondaire en mode de conduite de jour et à une deuxième intensité de courant secondaire en mode de conduite de nuit, la première intensité de courant secondaire étant supérieure à la deuxième intensité de courant secondaire.

9. Procédé selon la revendication 8, dans lequel la ou les sources de lumière secondaires sont utilisées à une première intensité de courant secondaire en mode de conduite de jour et à une deuxième intensité de courant secondaire en mode de conduite de nuit, la première intensité de courant secondaire étant de même niveau que la deuxième intensité de courant secondaire.
